(19)

Europäisches
Patentamt
European
Patent Office
Office européen
des brevets

(11) **EP 4 532 269 B1**

(12) **EUROPEAN PATENT SPECIFICATION**

(45) Date of publication and mention
of the grant of the patent:
**29.04.2026   Bulletin 2026/18**

(21) Application number: 23731575.9

(22) Date of filing: **01.06.2023**

(51) International Patent Classification (IPC):
***B60R 19/18*** *(2006.01)*

(52) Cooperative Patent Classification (CPC):
**B60R 19/18;** B60R 2019/182; B60R 2019/186

(86) International application number:
**PCT/EP2023/064752**

(87) International publication number:
**WO 2023/232977 (07.12.2023 Gazette 2023/49)**

(54) **CRASH MANAGEMENT SYSTEM FOR A MOTOR VEHICLE**

CRASHMANAGEMENTSYSTEM FÜR EIN KRAFTFAHRZEUG

SYSTÈME DE GESTION DES COLLISIONS POUR UN VÉHICULE À MOTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **03.06.2022   EP 22177172**

(43) Date of publication of application:
**09.04.2025   Bulletin 2025/15**

(73) Proprietor: **Constellium Singen GmbH
78224 Singen (DE)**

(72) Inventors:
• **RIETSCHLE, Dirk
78247 HILZINGEN (DE)**

• **STARK, Sebastian
78234 ENGEN (DE)**

(74) Representative: **Constellium - Propriété
Industrielle
C-TEC Constellium Technology Center
Propriété Industrielle
Parc Economique Centr'Alp
725, rue Aristide Bergès
CS10027
38341 Voreppe (FR)**

(56) References cited:
JP-A- 2015 147 437       JP-B2- 4 919 267
KR-A- 20140 037 711       KR-A- 20160 080 161
US-A1- 2001 017 473

**Description**

**FIELD OF THE INVENTION**

The invention relates to a crash management system for a vehicle which is characterized by particularly advantageous properties in particular in tests in which the vehicle collides with a pole-type obstacle, namely by the fact that the crossbeam has a particularly high strength viewed in the longitudinal direction.

**BACKGROUND**

A crash management system for a motor vehicle having the features of the preamble of claim 1 is known from JP 4919267 B2. The known crash management system is characterized by a reinforcing element disposed in the crossbeam in the area of each crash box. The cross section of the reinforcing element has a wall, which is either plane or corrugated, on the side facing the crash box or the rear flange of the crossbeam and a (longitudinal) slot on the side facing away from the crash box, i.e., facing the front flange of the crossbeam, said slot extending across the entire length of the reinforcing element and across almost the entire height of the front wall of the reinforcing element. In other words, this means that the reinforcing element is essentially open on the side facing away from the crash box, i.e., on the side facing the front flange of the crossbeam. The reinforcing element known from the mentioned document serves to connect or fasten the crossbeam in the area of the respective crash box.

A reinforcing element disposed in a middle area of the transverse beam and having a plurality of honeycomb-shaped openings on the end face facing the front flange of the crossbeam is known from JP 2015-147437 A. A reinforcing element of this kind can only be produced by a relatively elaborate casting process, for example.

Moreover, US 2018/0105129 A1 discloses a crash management system for a motor vehicle which has a crossbeam which comprises three corrugations or indentations extending in the longitudinal direction of the crossbeam on the front side facing away from the vehicle. In these areas, the material of the crossbeam is formed chiplessly, the corrugations or indentations acting as a reinforcement of the crossbeam owing to their approximately triangular or rectangular cross section. To corrugations or indentations which each have an approximately V-shaped cross section extend at a distance from each other above and below a center plane which is perpendicular to a front flange and a rear flange of the crossbeam.

US 2001/017473, showing the preamble of claim 1, wherein it discloses a crash management system for a motor vehicle which has a crossbeam which comprises a reinforcing beam with openings formed in parts of at least either the upper wall or the lower wall to reduce the strength of the joining parts.

A reinforcing beam arranged in a crossbeam of a crash management system to reinforce the local stiffness of the cross beam is known from KR 2014 0037711 A.

Last, it is known from DE 102019 101 718 A1 for additional braces to be used between the crash boxes and the crossbeam in particular in electric vehicles in order to improve the crash behavior against a pole-type obstacle, the braces connecting the crash boxes to the crossbeam on their outer sides facing away from each other.

**DESCRIPTION OF THE INVENTION**

The crash management system for a motor vehicle according to the invention having the features of claim 1 has the advantage that it prevents or delays the crossbeam from being torn apart in particular in the context of crash tests in which the crossbeam collides with a pole-type obstacle centrally or with a lateral offset. Such a breaking apart of the crossbeam in the event of a collision is critical in particular in the context of electric vehicles, where there typically is no motor block or a similar solid element which delays or decelerates the movement of the obstacle in the direction of the passenger compartment in the area of the front. Furthermore, its geometry makes it suitable for being produced in a relatively simple and inexpensive manner by extrusion and subsequent machining.

Hence, in view of the explanations above, a crash management system for a motor vehicle according to the invention having the features of claim 1 provides that multiple recesses are provided, that the total surface of the multiple recesses in the front wall is between 1 % and 70 %, preferably between 1 % and 10 % of the surface of the front wall, and that the reinforcing element is at least essentially aligned centrally with a center plane of the crossbeam.

Advantageous embodiments of the crash management system for a motor vehicle according to the invention are indicated in the dependent claims.

With a view to a relatively simple producibility of the recesses in connection with an optimized effect of the reinforcing element at different points of impact with an obstacle in the form of a pole, it has proven particularly advantageous for the multiple recesses to in particular be in the form of slots, the multiple recesses being disposed in a direction extending perpendicularly to a longitudinal direction of the reinforcing element and of the crossbeam or at an angle between 10° and 45° relative a center plane of the crossbeam and extending perpendicularly to a longitudinal direction of the reinforcing element and of the crossbeam.

With regard to the geometry of the at least one recess, the latter is preferably in the form of a slot having a slot width between 1 mm and 6 mm, preferably between 3 mm and 4 mm, with a view to a production by sawing using a sawblade. Alternatively, however, it is also possible for the slot to have a varying slot width instead of a constant slot width, but preferably within the range of the mentioned dimensions.

In a yet again modified shape of the recesses, they can each be in the form of a hole or a similar opening having a closed shape. Holes or openings of this kind can be produced by drilling or by laser machining, for example. In this context, it is noted that the shape and/or the arrangement of the recesses can be varied in various ways and that other shapes of recesses are conceivable, as well.

An optimized effect of the reinforcing element with regard to the event of a collision is achieved if the at least one recess extends across the entire height of the front wall of the reinforcing element. Such a configuration is also sensible and can be reproducible with regard to a production step for forming the at least one recess, which typically takes place by sawing using a sawblade.

Moreover, in particular in the context of the production of the at least one recess mentioned last, the reinforcing element preferably has at least one transverse wall protruding from the front wall in the direction of the rear flange of the crossbeam, and the depth of the at least one recess in the at least one transverse wall is preferably no more than 2/3 of the width of the reinforcing element when viewed in the direction of the rear flange of the crossbeam. Such a configuration enables an optimization of the deformation properties or an optimized load absorption on the one hand and a mechanically secure connection of the at least one transverse wall to a rear wall of the reinforcing element on the other hand.

With respect to the typical length of the reinforcing element, there is also an optimized range regarding the number of the recesses or slots. It indicates that there are between two and six recesses, preferably four recesses, and that the recesses are in particular disposed approximately at equal distances in a direction running in the longitudinal direction of the reinforcing element or the crossbeam.

The length of the reinforcing element is adapted to the respective use. Viewed in the longitudinal direction of the crossbeam, the reinforcing element has in particular a minimum length of approx. 400 mm and a maximum length at which the reinforcing element reaches outer sides of crash boxes which can be connected to the cross beam, the outer sides facing away from each other. Hence, with regard to the maximum length of the reinforcing element, it is selected in such a manner that the attachment of the crossbeam to the crash boxes simultaneously fixes the reinforcing element in the longitudinal direction, which typically takes place by means of screws or similar fastening elements serving to attach the crossbeam (and the reinforcing element) with the crash box. Hence, if the reinforcing element is connected to the crossbeam via the crash boxes, no form fit or clamping fit between the crossbeam and the reinforcing element is required in order to fix the reinforcing element in the cross section of the crossbeam.

Regarding the production or the material of the crossbeam and the reinforcing element, the crossbeam and/or the reinforcing element are/is preferably (an) extruded part(s) consisting of aluminum or an aluminum alloy.

For arranging the reinforcing element in the crossbeam, it is moreover essential that its position is fixed, i.e., the reinforcing element cannot move in the crossbeam. Aside from the fixation or attachment of the reinforcing element in the longitudinal direction of the crossbeam mentioned above, for example, via the crash boxes or by means of separate fastening screws outside of the areas of the crash boxes, the reinforcing element can moreover be accommodated and fixed in the crossbeam by a form fit or a clamping fit in a direction perpendicular to the length of the crossbeam. This is always possible in a simple manner when the crossbeam is curved at the installation point of the reinforcing element, which has the effect that the reinforcing element, which is initially straight, is automatically deformed when it is inserted into the cross section of the crossbeam, resulting in a form fit or a clamping fit. Thus, no additional fastening elements and no additional installation work involving fastening screws, for example, is necessary. The form or clamping fit is preferably used when the reinforcing element has a length which does not allow the reinforcing element to be fixed in the crossbeam via the crash boxes.

Also, the form or clamping fit can be established by an outer deformation of the crossbeam (in particular when the crossbeam is otherwise straight at the installation point of the reinforcing element), the deformations being transferred to the reinforcing element in the form of indentations or corrugations.

There are also various options regarding the size and the geometry of the reinforcing element itself. For instance, the reinforcing element can extend across the entire inner height of the crossbeam at least in the area of the front wall of the reinforcing element. Alternatively, the reinforcing element can also extend across no more than a portion of the inner height of the crossbeam at least in the area of the front wall and can preferably be disposed centrally relative to a center plane of the crossbeam.

In a first configuration, the cross section of the reinforcing element preferably has at least one chamber. The cross section of the reinforcing element can also have a rear wall on the side facing away from the front wall, the rear wall being connected to the front wall via at least one transverse wall.

In the latter solution, it is possible for the rear wall of the reinforcing element to have a greater wall thickness than the front wall so as to achieve a particularly low weight.

Other advantages, features and details of the invention are apparent from the following description of preferred embodiments of the invention and from the drawings.

## DESCRIPTION OF THE DRAWINGS

| Fig. 1 | is a perspective sectional illustration of a crash management system for a motor vehicle; |
|---|---|
| Fig. 2 | is a possible cross section of the crash management system of Fig. 1; |
| Fig. 3 | is a front view of a reinforcing element according to the direction of arrow III in Fig. 2; |
| Fig. 4 | is a top view of the reinforcing element according to the direction of arrow IV in Fig. 3; |
| Fig. 5 to Fig. 11 | each show a cross section of different geometries of crossbeams and reinforcing elements; |
| Fig. 12 to Fig. 14 | are front views according to the illustration of Fig. 3 with modified recesses in the reinforcing element; |
| Fig. 15 and Fig. 16 | show crash tests in connection with a crash management system having no reinforcing element configured according to the invention in the crossbeam; and |
| Fig. 17 and Fig. 18 | show an illustration corresponding to Figs. 15 and 16 with a crash management system configured according to the invention. |

## DETAILED DESCRIPTION OF THE INVENTION

Identical elements or elements having the same function are provided with the same reference signs in the Figures.

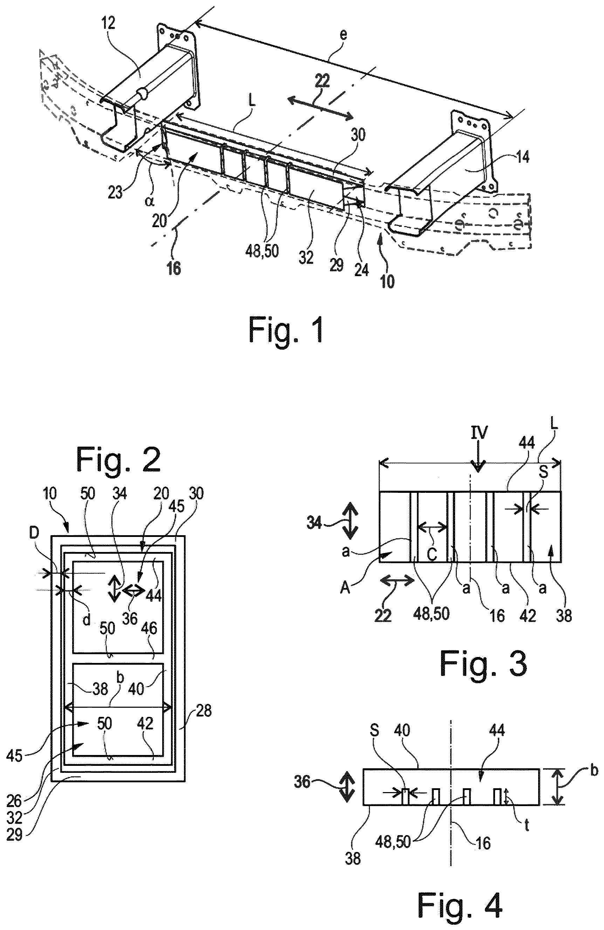

Fig. 1 shows a crash management system 100 for a motor vehicle, in particular for a passenger car. Crash management system 100 can be employed both in a front area of the motor vehicle and in a rear area. Crash management system 100 comprises a crossbeam 10, which is connected to a body shell structure (not shown) of the motor vehicle, in particular to longitudinal beams of the motor vehicle, in a known manner by means of two crash boxes 12 and 14. Crash boxes 12 and 14 are disposed at an outer distance e from each other; crossbeam 10 can be at least partially curved when viewed in the longitudinal direction, as is known per se.

A reinforcing element 20 is disposed within the cross section of crossbeam 10. Reinforcing element 20 is configured as an insertion part which can be inserted into the cross section of crossbeam 10 and is preferably fixed within crossbeam 10 by a form-fit or a clamping-fit connection, as explained in more detail below. Reinforcing element 20, as well as crossbeam 10, is preferably an extruded part consisting of aluminum or an aluminum alloy.

In a longitudinal direction of crossbeam 10 and reinforcing element 20, which is indicated by double arrow 22, reinforcing element 20 has a length L, which can be between 400 mm and outer distance e between crash boxes 12 and 14 at the outer sides of crash boxes 12 and 14 which face away from each other. Furthermore, it is apparent from Fig. 1 that the two opposite end faces 23 and 24 of reinforcing element 20 can be beveled in such a manner that length L of reinforcing element 20 is longer on the side facing crash boxes 12 and 14 than on the side facing away from crash boxes 12 and 14. Angle $\alpha$, by which end faces 23 and 24 can be beveled, is between 30° and 60°, for example.

According to the illustration of Fig. 2, crossbeam 10 has, for example, a rectangular cross section having a single chamber 26. The cross section of crossbeam 10 comprises a rear flange 28, which is disposed on the side of crash boxes 12 and 14 and which is connected to a front flange 32, which is disposed on the side opposite crash boxes 12 and 14, via two transverse flanges 29 and 30. As an example, the wall thicknesses of rear flange 28, transverse flanges 29 and 30, and front flange 32 are identical; however, they can also differ from each other.

Reinforcing element 20 is disposed within chamber 26, i.e., the cross section of crossbeam 10, in such a manner that reinforcing element 20 is aligned, i.e., extends centrally, with a center plane 16 of crossbeam 10 or of the vehicle according to the illustration of Fig. 1.

The first cross section of reinforcing element 20, which is illustrated in Figs. 2 to 4, has a rectangular outer contour corresponding to the inner contour of the cross section of crossbeam 10 in such a manner that the cross section of reinforcing element 20 is accommodated within chamber 26 in an at least approximately form-fitting and clamping-fitting manner and is disposed in physical contact with rear flange 28, front flange 32, and transverse flanges 29 and 30. The form and clamping fit between the cross section of reinforcing element 20 and crossbeam 10 has the effect that reinforcing element 20 is accommodated and fixed within the cross section of crossbeam 10 according to the direction of double arrows 34 and 36, namely both in the transverse direction and in the vertical direction of crossbeam 10 perpendicular to the longitudinal direction of crossbeam 10, without any additional fastening elements.

The cross section of reinforcing element 20 has a front wall 38, which is preferably plane, closed other than in the area of recesses 48 or slots 50, and disposed in physical contact with front flange 32 of crossbeam 10, a rear wall 40, which is disposed in physical contact with rear flange 28, and two transverse walls 42 and 44, which are preferably disposed in physical contact with transverse flanges 29 and 30. Purely for the sake of a clearer recognizability of the cross sections of crossbeam 10 and reinforcing element 20, they are drawn at a slight distance from each other, i.e., without physical contact, in Fig. 2. An additional partition wall 46 is located between transverse walls 42 and 44 at middle height of reinforcing element 20. Thus, the cross section of reinforcing element 20 has two closed chambers 45.

As is apparent from a combined view of Figs. 1, 3, and 4, reinforcing element 20 moreover has, as an example, four recesses 48 in the form of slots 50, which run in the direction of double arrow 34 and extend across the entire height of front wall 38. Slot width s of slots 50 is between 1 mm and 6 mm, preferably between 3 mm and 4 mm. Slots 50 in front wall 38 are preferably formed by means of a round sawblade (not shown in the Figures), which forms slots 50 by an advancing movement in the direction of front wall 38. As is apparent from a combined view of Figs. 2 and 4 in particular, slots 50 are formed not only in front wall 38 but also in transverse walls 42 and 44 and in partition wall 46 in the direction of double arrow 36. Maximum depth t of slots 50 is approx. 2/3 of width b of reinforcing element 20. Owing to the production process, the presence of a partition wall 46 and the use of a sawblade for forming slots 50 has the result that depth t of slots 50 in transverse walls 42 and 44 is less than in partition wall 46, which is disposed in the middle.

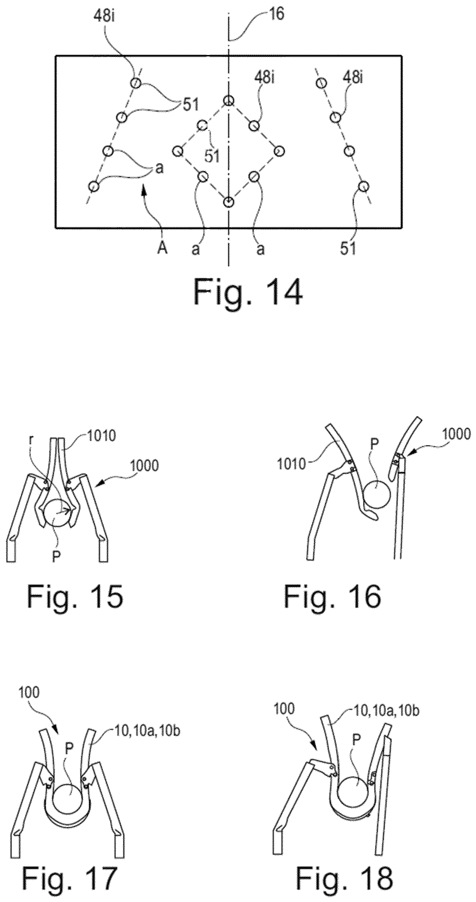

In the exemplary embodiment illustrated, four slots 50 are provided on reinforcing element 20. The number n of slots 50 is preferably between two slots 50 and six slots 50. The preferably at least approximately equal distance C between the individual slots 50 can be determined as a function of a radius r of a pole P, which is illustrated in Figs. 15 to 18, according to the formula

$$C = r/(n - 1).$$

In the exemplary embodiment illustrated, wall thickness d of front wall 38 of reinforcing element 20 is equal to wall thickness D of rear wall 40. However, wall thickness D of rear wall 40 is preferably greater than wall thickness d of front wall 38. In particular, wall thickness D of rear wall 40 is between 1.2 times and 3 times wall thickness d of front wall 38, preferably between 1.5 times and 2.0 times.

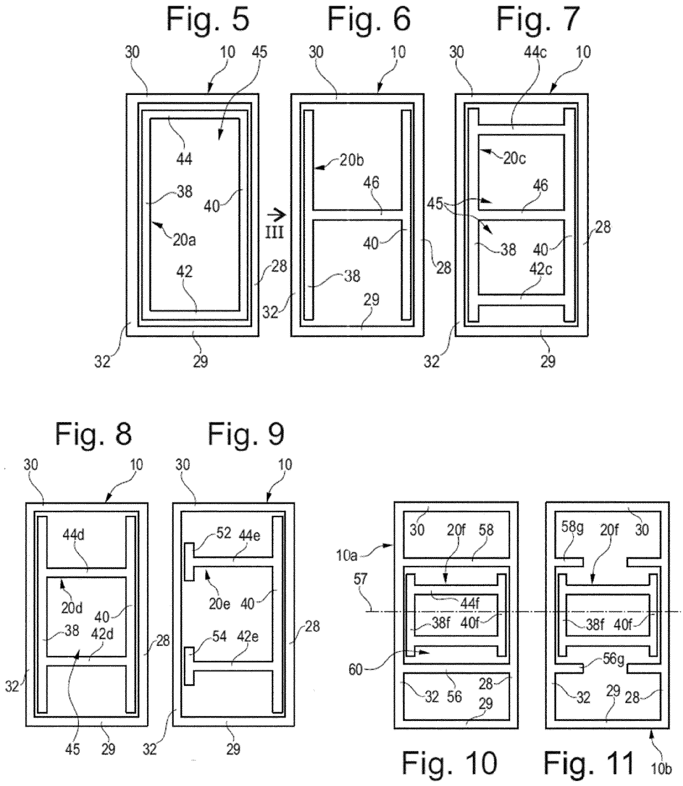

Fig. 5 shows the cross section of a crash management system 100 comprising a modified reinforcing element 20a. In particular, reinforcing element 20a has no partition wall 46 contrary to reinforcing element 20. The remaining geometry of reinforcing element 20a corresponds to reinforcing element 20.

By contrast, reinforcing element 20b according to Fig. 6 has only one partition wall 46 (disposed in the middle) but no transverse walls 42 and 44.

Reinforcing element 20c according to Fig. 7 is essentially configured according to reinforcing element 20 of Fig. 2. However, transverse walls 42c and 44c are offset inward in the direction of partition wall 46.

By contrast, reinforcing element 20d according to Fig. 8 has two transverse walls 42d and 44d, which are offset inward, a partition wall 46 being omitted.

The cross section of reinforcing element 20e in Fig. 9 approximately corresponds to the cross section of reinforcing element 20d; however, no front wall 38 formed across the entire inner height of the cross section of crossbeam 10 is provided. It is replaced by two longitudinal legs 52 and 54, which run perpendicular to the drawing plane of Fig. 9 and are connected to transverse walls 42e and 44e, longitudinal legs 52 and 54 also being disposed in physical contact with front flange 32 of crossbeam 10.

In the exemplary embodiment of crash management system 100 illustrated in Fig. 10, a crossbeam 10a is provided, which has inner flanges 56 and 58, which are offset inward, in addition to transverse flanges 29 and 30. A reinforcing element 20f is disposed within chamber 60, which is defined by inner flanges 56 and 58, the geometry of reinforcing element 20f comprising two transverse walls 42f and 44f, which are shifted inward and connect front wall 38f to rear wall 40f, in addition to front wall 38f and rear wall 40f, whose heights are adapted to chamber 60. Reinforcing element 20f is disposed symmetrically with respect to a center plane 57 of crossbeam 10a.

Last, a crossbeam 10b using reinforcing element 20f is illustrated in Fig. 11, inner flanges 56g and 58g thereof not extending across the entire width of crossbeam 10g contrary to Fig. 10.

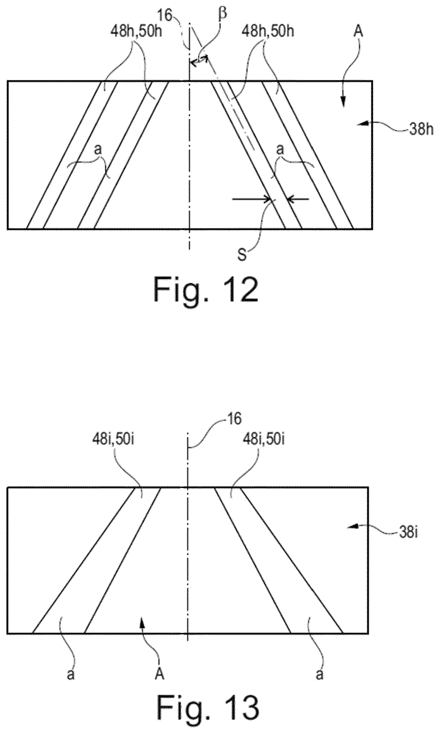

Fig. 12 shows a front view of a front wall 38h, in which recesses 48h or slots 50h extend at an oblique angle β between 10° and 45° relative to center plane 16. As an example, slots 50h are each illustrated with a constant and identical slot width s. However, they can also have differing slot widths s, or slot width s can change within one slot 50h. A combination of oblique and perpendicular slots 50h or slots 50h having different angles β is conceivable, as well.

Fig. 13 shows a front wall 38i, which has two recesses 48i or slots 50i, which are disposed obliquely and symmetrically with respect to center plane 16 and have varying slot widths s.

Fig. 14 shows recesses 48j in the form of holes or openings 51, which each have a closed contour. Openings 51 are also disposed symmetrically with respect to center plane 16, central openings 51 being disposed in the shape of a rhombus, whereas outer openings 51 are each disposed along an oblique line. Of course, other shapes or cross sections of openings 51 and different sizes are conceivable, as well.

All recesses 48, 48h, 48i, and 48j on front walls 38, 38f, 38h, 38i, and 38j share the trait that they each have an area a, the sum of all areas a of recesses 48, 48h, 48i, and 48j being between 1 % and 70 %, preferably between 1 % and 10% of area A of front walls 38, 38f, 38h, 38i, and 38j (without recesses 48, 48h, 48i, and 48j).

Fig. 15 shows how a conventional crash management system 1000, which has no reinforcing element 20, 20a to 20f, collides with a pole-type obstacle P in the event of a crash. In particular, it is apparent that obstacle P, which is located in the middle with respect to the length of crossbeam 1010, causes crossbeam 1010 to break apart in the middle at a certain penetration depth of obstacle P into the vehicle. This poses the danger that obstacle P will penetrate further into the motor compartment of the motor vehicle, i.e., in the direction of the passenger compartment.

Fig. 16 illustrates the crash behavior of crash management system 1000 when obstacle P collides with crash management system 1000 eccentrically (offset crash). In this case, too, crash management system 1000 exhibits the same negative crash behavior as discussed in the context of Fig. 15.

Last, Figs. 17 and 18 illustrate how a crash management system 100 according to the invention, which uses reinforcing elements 20, 20a to 20f, which are configured according to the invention, reacts under the same crash conditions as illustrated in Figs. 15 and 16 in the event of a central crash and an eccentric crash with obstacle P, respectively. In particular, it is apparent that obstacle P does not cause crossbeam 10, 10a, 10b to be torn apart in the area of obstacle P in these events; instead, crossbeam 10, 10a, 10b is merely deformed uniformly while staying in one piece otherwise when viewed in the longitudinal direction.

Thus described crash management system 100, i.e. crossbeams 10, 10a, and 10b and reinforcing element 20, 20a to 20f, can be altered or modified in various ways without departing from the idea of the invention. For instance, it is conceivable for crossbeam 10, 10a or 10b to be a steel component. Also, reinforcing element 20, 20a to 20f can be fixed within the cross section of crossbeam 10, 10a, 10b in another manner, in particular by means of fastening elements in the form of fastening screws, if no form-fit or clamping-fit connection is established.

Reference signs

| | |
|---|---|
| 10, a, b | crossbeam |
| 12 | crash box |
| 14 | crash box |
| 16 | center plane |
| 20, a, b, c, d, e, f | reinforcing element |
| 22 | double arrow |
| 23 | end face |
| 24 | end face |
| 26 | chamber |
| 28 | rear flange |
| 29 | transverse flange |
| 30 | transverse flange |
| 32 | front flange |
| 34 | double arrow |
| 36 | double arrow |
| 38, f, h, i, j | front wall |
| 40, f | rear wall |
| 42, c, d, e, f | transverse wall |
| 44, c, d, e, f | transverse wall |
| 45 | chamber |
| 46 | partition wall |
| 48, h, i, j | recess |
| 50, h, i | slot |
| 51 | opening |
| 52 | longitudinal leg |
| 54 | longitudinal leg |
| 56, f | inner flange |
| 57 | center plane |
| 58, f | inner flange |
| 60 | chamber |
| 100, 1000 | crash management system |
| 1010 | crossbeam |
| A | area |
| b | width |
| C | distance |
| a, e | distance |
| L | length |
| n | number |
| P | pole |
| r | radius |
| s | slot width |
| t d, | depth |
| D | wall thickness |
| $\alpha$, $\beta$ | angle |

**Claims**

1. A crash management system (100) for a motor vehicle, the crash management system (100) comprising a crossbeam (10; 10a; 10b) for being connected to a body shell structure of the motor vehicle, the crossbeam (10; 10a; 10b) comprising a front flange (32), a rear flange (28), and at least two transverse flanges (29, 30) connecting the front flange (32) to the rear flange (28), said flanges forming a closed cross section of the crossbeam (10; 10a; 10b), and the crash management system (100) comprising a reinforcing element (20; 20a to 20f) disposed in the cross section of the crossbeam (10; 10a; 10b) and having multiple recesses (48; 48h; 48i; 48j) in a front wall (38; 38f; 38h; 38i; 38j) of the reinforcing element (20; 20a to 20f) on the side facing the front flange (32) of the crossbeam (10; 10a; 10b), **characterized in that**
the reinforcing element (20; 20a to 20f) is aligned at least essentially centrally with a center plane (16) of the crossbeam (10; 10a; 10b) and **in that** the multiple recesses (48; 48h; 48j) being disposed in a direction running perpendicularly to a longitudinal direction (22) of the reinforcing element (20; 20a to 20f) and of the crossbeam (10; 10a; 10b) or at an angle ($\beta$) between 10° and 45° relative to the center plane (16) perpendicularly to a longitudinal direction (22) of the reinforcing element (20; 20a to 20f) and of the crossbeam (10; 10a; 10b), wherein the multiple recesses (48; 48h; 48i; 48j) are provided, that the total area (a) of the multiple recesses (48; 48h; 48i; 48j) in the front wall (38; 38f; 38h; 38i; 38j) is between 1 % and 70 %, preferably between 1 % and 10 % of the area (A) of the front wall (38; 38f; 38h; 38i; 38j).

2. The crash management system according to claim 1, **characterized in that**
the multiple recesses (48; 48h; 48i) are in particular in the form of slots (50; 50h; 50i).

3. The crash management system according to claim 1 or 2,
**characterized in that**
the multiple recesses (48; 48h; 48i) extend across the entire height of the front wall (38; 38f; 38h; 38i) of the reinforcing element (20; 20a to 20f).

4. The crash management system according to any one of claims 1 to 3, **characterized in that**
the multiple recesses (48; 48h; 48i) are in the form of a slot (50; 50h; 50i) having a slot width (s) between 1 mm and 6 mm, preferably between 3 mm and 4 mm.

5. The crash management system according to claim 1, **characterized in that**
the multiple recesses (48j) are each in the form of a hole or a similar opening (51) having a closed shape.

6. The crash management system according to any one of claims 1 to 5, **characterized in that**
the reinforcing element (20; 20a to 20f) has at least one transverse wall (42; 42c; 42d; 42e; 42f, 44; 44c; 44d; 44e; 44f) protruding from the front wall (38; 38f; 38h; 38i; 38j) in the direction of the rear flange (28) of the crossbeam (10; 10a; 10b), and that the depth (t) of the at least one recess (48; 48h; 48i; 48j) in the at least one transverse wall (42; 42c; 42d; 42e; 42f, 44; 44c; 44d; 44e; 44f) is no more than 2/3 of the width (b) of the reinforcing element (20; 20a to 20f) when viewed in the direction of the rear flange (28) of the crossbeam (10; 10a; 10b).

7. The crash management system according to any one of claims 1 to 6, **characterized in that**
between two and six recesses (48; 48h; 48j), preferably four recesses (48; 48h; 48j), are provided, and that the recesses (48; 48h; 48j) are in particular disposed at equal distances (C) in a direction running in the longitudinal direction (22) of the reinforcing element (20; 20a to 20f).

8. The crash management system according to any one of claims 1 to 7, **characterized in that**
the reinforcing element (20; 20a to 20f) has a minimum length (L) of 400 mm and a maximum length (L) at which the reinforcing element (20; 20a to 20f) reaches outer sides of crash boxes (12, 14) connectable to the crossbeam (10; 10a; 10b) when viewed in the longitudinal direction (22) of the crossbeam (10; 10a; 10b).

9. The crash management system according to any one of claims 1 to 8, **characterized in that**
the crossbeam (10; 10a; 10b) and/or the reinforcing element (20; 20a to 20f) are/is (an) extruded section(s) consisting of aluminum or an aluminum alloy.

10. The crash management system according to any one of claims 1 to 9, **characterized in that**
the reinforcing element (20; 20a to 20f) is accommodated and fixed in the crossbeam (10; 10a; 10b) by a form fit or a clamping fit in a direction perpendicular to the longitudinal direction (22) of the crossbeam (10; 10a; 10b).

11. The crash management system according to any one of claims 1 to 10, **characterized in that**
the reinforcing element (20; 20a to 20e) extends across the entire inner height of the crossbeam (10) at least in the area of the front wall (38; 38h; 38i).

12. The crash management system according to any one of claims 1 to 10, **characterized in that**
the reinforcing element (20f) extends across no more than a portion of the inner height of the crossbeam (10a; 10b) at least in the area of the front wall (38f) and is preferably disposed symmetrically with respect to a center plane (57) of the crossbeam (10a; 10b).

13. The crash management system according to any one of claims 1 to 12, **characterized in that**
the cross section of the reinforcing element (20; 20a; 20c; 20d; 20f) comprises at least one chamber (45).

14. The crash management system according to any one of claims 1 to 13, **characterized in that**

the cross section of the reinforcing element (20; 20a to 20f) comprises a rear wall (40, 40f) disposed parallel to the front wall (38; 38f; 38h; 38i; 38j) and connected to the front wall (38; 38f; 38h; 38i; 38j) via at least one transverse wall (42; 42c; 42d; 42e; 42f, 44; 44c; 44d; 44e; 44f).

15. The crash management system according to claim 14,
**characterized in that**
the rear wall (40; 40f) of the reinforcing element (20; 20a to 20f) has a greater wall thickness (D) than the front wall (38; 38f; 38h; 38i; 38j).


**Patentansprüche**

1. Crashmanagementsystem (100) für ein Kraftfahrzeug, wobei das Crashmanagementsystem (100) einen Querträger (10; 10a; 10b) zur Verbindung mit einer Karosseriestruktur des Kraftfahrzeugs umfasst, wobei der Querträger (10; 10a; 10b) einen vorderen Flansch (32), einen hinteren Flansch (28) und mindestens zwei Querflansche (29, 30), die den vorderen Flansch (32) mit dem hinteren Flansch (28) verbinden, umfasst, wobei die Flansche einen geschlossenen Querschnitt des Querträgers (10; 10a; 10b) bilden, und das Crashmanagementsystem (100) ein in dem Querschnitt des Querträgers (10; 10a; 10b) angeordnetes Verstärkungselement (20; 20a bis 20f) umfasst, das mehrere Aussparungen (48; 48h; 48i; 48j) in einer Vorderwand (38; 38f; 38h; 38i; 38j) des Verstärkungselements (20; 20a bis 20f) auf der dem vorderen Flansch (32) des Querträgers (10; 10a; 10b) zugewandten Seite aufweist,
**dadurch gekennzeichnet, dass**
das Verstärkungselement (20; 20a bis 20f) mindestens im Wesentlichen mittig zu einer Mittelebene (16) des Querträgers (10; 10a; 10b) ausgerichtet ist und dass die mehreren Aussparungen (48; 48h; 48j) in einer Richtung senkrecht zu einer Längsrichtung (22) des Verstärkungselements (20; 20a bis 20f) und des Querträgers (10; 10a; 10b) oder in einem Winkel ($\beta$) zwischen 10° und 45° relativ zu der Mittelebene (16) senkrecht zu einer Längsrichtung (22) des Verstärkungselements (20; 20a bis 20f) und des Querträgers (10; 10a; 10b) angeordnet sind, wobei die mehreren Aussparungen (48; 48h; 48i; 48j) so vorgesehen sind, dass die Gesamtfläche (a) der mehreren Aussparungen (48; 48h; 48i; 48j) in der Vorderwand (38; 38f; 38h; 38i; 38j) zwischen 1 % und 70 %, vorzugsweise zwischen 1 % und 10 % der Fläche (A) der Vorderwand (38; 38f; 38h; 38i; 38j), liegt.

2. Crash-Management-System nach Anspruch 1,
**dadurch gekennzeichnet, dass**
die mehreren Aussparungen (48; 48h; 48i) insbesondere in Form von Schlitzen (50; 50h; 50i) ausgebildet sind.

3. Crash-Management-System nach Anspruch 1 oder 2,
**dadurch gekennzeichnet, dass**
die mehreren Aussparungen (48; 48h; 48i) sich über die gesamte Höhe der Vorderwand (38; 38f; 38h; 38i) des Verstärkungselements (20; 20a bis 20f) erstrecken.

4. Crash-Management-System nach einem der Ansprüche 1 bis 3,
**dadurch gekennzeichnet, dass**
die mehreren Aussparungen (48; 48h; 48i) in Form eines Schlitzes (50; 50h; 50i) mit einer Schlitzbreite (s) zwischen 1 mm und 6 mm, vorzugsweise zwischen 3 mm und 4 mm, ausgebildet sind.

5. Crash-Management-System nach Anspruch 1,
**dadurch gekennzeichnet, dass**
die mehreren Aussparungen (48j) jeweils in Form eines Lochs oder einer ähnlichen Öffnung (51) mit einer geschlossenen Form ausgebildet sind.

6. Crash-Management-System nach einem der Ansprüche 1 bis 5,
**dadurch gekennzeichnet, dass**
das Verstärkungselement (20; 20a bis 20f) mindestens eine Querwand (42; 42c; 42d; 42e; 42f, 44; 44c; 44d; 44e; 44f) aufweist, die von der Vorderwand (38; 38f; 38h; 38i; 38j) in Richtung des hinteren Flansches (28) des Querträgers (10; 10a; 10b) hervorsteht, und dass die Tiefe (t) der mindestens einen Aussparung (48; 48h; 48i; 48j) in der mindestens einen Querwand (42; 42c; 42d; 42e; 42f, 44; 44c; 44d; 44e; 44f) nicht mehr als 2/3 der Breite (b) des Verstärkungselements (20; 20a bis 20f), in Richtung des hinteren Flansches (28) des Querträgers (10; 10a; 10b) gesehen, beträgt.

7. Crash-Management-System nach einem der Ansprüche 1 bis 6,
**dadurch gekennzeichnet, dass**
zwischen zwei und sechs Aussparungen (48; 48h; 48j), vorzugsweise vier Aussparungen (48; 48h; 48j), vorgesehen sind, und dass die Aussparungen (48; 48h; 48j) insbesondere in gleichen Abständen (C) in einer in Längsrichtung (22) des Verstärkungselements (20; 20a bis 20f) verlaufenden Richtung angeordnet sind.

8. Crash-Management-System nach einem der Ansprüche 1 bis 7,
**dadurch gekennzeichnet, dass**
das Verstärkungselement (20; 20a bis 20f) eine Mindestlänge (L) von 400 mm und eine Maximallänge (L) aufweist, bei der das Verstärkungselement (20; 20a bis 20f), in Längsrichtung (22) des Querträgers (10; 10a; 10b) betrachtet, mit dem Querträger (10; 10a; 10b) verbindbare Außenseiten von Crashboxen (12, 14) erreicht.

9. Crash-Management-System nach einem der Ansprüche 1 bis 8,
**dadurch gekennzeichnet, dass**
der Querträger (10; 10a; 10b) und/oder das Verstärkungselement (20; 20a bis 20f) Strangpressprofile bestehend aus Aluminium oder einer Aluminiumlegierung sind/ist.

10. Crash-Management-System nach einem der Ansprüche 1 bis 9,
**dadurch gekennzeichnet, dass**
das Verstärkungselement (20; 20a bis 20f) in dem Querträger (10; 10a; 10b) durch Formschluss oder Klemmpassung in einer Richtung senkrecht zu der Längsrichtung (22) des Querträgers (10; 10a; 10b) aufgenommen und befestigt ist.

11. Crash-Management-System nach einem der Ansprüche 1 bis 10,
**dadurch gekennzeichnet, dass**
das Verstärkungselement (20; 20a bis 20e) sich über die gesamte Innenhöhe des Querträgers (10) mindestens in dem Bereich der Vorderwand (38; 38h; 38i) erstreckt.

12. Crash-Management-System nach einem der Ansprüche 1 bis 10,
**dadurch gekennzeichnet, dass**
das Verstärkungselement (20f) sich mindestens in dem Bereich der Vorderwand (38f) über nicht mehr als einen Abschnitt der Innenhöhe des Querträgers (10a; 10b) erstreckt und vorzugsweise symmetrisch im Bezug zu einer Mittelebene (57) des Querträgers (10a; 10b) angeordnet ist.

13. Crash-Management-System nach einem der Ansprüche 1 bis 12,
**dadurch gekennzeichnet, dass**
der Querschnitt des Verstärkungselements (20; 20a; 20c; 20d; 20f) mindestens eine Kammer (45) umfasst.

14. Crash-Management-System nach einem der Ansprüche 1 bis 13,
**dadurch gekennzeichnet, dass**
der Querschnitt des Verstärkungselements (20; 20a bis 20f) eine Rückwand (40, 40f) umfasst, die parallel zu der Vorderwand (38; 38f; 38h; 38i; 38j) angeordnet und über mindestens eine Querwand (42; 42c; 42d; 42e; 42f, 44; 44c; 44d; 44e; 44f) mit der Vorderwand (38; 38f; 38h; 38i; 38j) verbunden ist.

15. Crash-Management-System nach Anspruch 14,
**dadurch gekennzeichnet, dass**
die Rückwand (40; 40f) des Verstärkungselements (20; 20a bis 20f) eine größere Wandstärke (D) als die Vorderwand (38; 38f; 38h; 38i; 38j) aufweist.

**Revendications**

1. Système de gestion des collisions (100) pour un véhicule à moteur, le système de gestion des collisions (100) comprenant une traverse (10 ; 10a ; 10b) destinée à être reliée à une structure de carrosserie du véhicule à moteur, la traverse (10 ; 10a ; 10b) comprenant un flanc avant (32), un flanc arrière (28), et au moins deux flancs transversaux (29, 30) reliant le flanc avant (32) au flanc arrière (28), lesdits flancs formant une section transversale fermée de la traverse (10 ; 10a ; 10b), et le système de gestion des collisions (100) comprenant un élément de renfort (20 ; 20a à 20f) disposé dans la section transversale de la traverse (10 ; 10a ; 10b) et ayant de multiples évidements (48 ; 48h ; 48i ; 48j) dans une paroi avant (38 ; 38f ; 38h ; 38i ; 38j) de l'élément de renfort (20 ; 20a à 20f) sur le côté faisant face au flanc avant (32) de la traverse (10 ; 10a ; 10b),
**caractérisé en ce que**
l'élément de renfort (20 ; 20a à 20f) est aligné au moins essentiellement de manière centrale avec un plan central (16) de la traverse (10 ; 10a ; 10b) et **en ce que** les multiples évidements (48 ; 48h ; 48i) étant disposés dans une direction s'étendant perpendiculairement à une direction longitudinale (22) de l'élément de renfort (20 ; 20a à 20f) et de la traverse (10 ; 10a ; 10b) ou avec un angle (β) entre 10° et 45° par rapport au plan central (16) perpendiculairement à une direction longitudinale (22) de l'élément de renfort (20 ; 20a à 20f) et de la traverse (10 ; 10a ; 10b), dans lequel les multiples évidements (48 ; 48h ; 48i ; 48j) sont ménagés, **en ce que** l'aire totale (a) des multiples évidements (48 ; 48h ; 48i ; 48j) dans la paroi avant (38 ; 38f ; 38h ; 38i ; 38j) est entre 1 % et 70 %, de préférence entre 1 % et 10 % de l'aire (A) de la paroi avant (38 ; 38f ; 38h ; 38i ; 38j).

2. Système de gestion des collisions selon la revendication 1,
**caractérisé en ce que**
les multiples évidements (48 ; 48h ; 48i) se présentent en particulier sous la forme de fentes (50 ; 50h ; 50i).

3. Système de gestion des collisions selon la revendication 1 ou 2,
**caractérisé en ce que**
les multiples évidements (48 ; 48h ; 48i) s'étendent sur la totalité de la hauteur de la paroi avant (38 ; 38f ; 38h ; 38i) de l'élément de renfort (20 ; 20a à 20f).

**4.** Système de gestion des collisions selon l'une quelconque des revendications 1 à 3, **caractérisé en ce que**
les multiples évidements (48 ; 48h ; 48i) se présentent sous la forme d'une fente (50 ; 50h ; 50i) ayant une largeur de fente (s) entre 1 mm et 6 mm, de préférence entre 3 mm et 4 mm.

**5.** Système de gestion des collisions selon la revendication 1,
**caractérisé en ce que**
les multiples évidements (48j) se présentent chacun sous la forme d'un trou ou d'un orifice similaire (51) ayant une géométrie fermée.

**6.** Système de gestion des collisions selon l'une quelconque des revendications 1 à 5, **caractérisé en ce que**
l'élément de renfort (20 ; 20a à 20f) possède au moins une paroi transversale (42 ; 42c ; 42d ; 42e ; 42f, 44 ; 44c ; 44d ; 44e ; 44f) faisant saillie à partir de la paroi avant (38 ; 38f ; 38h ; 38i ; 38j) dans la direction du flanc arrière (28) de la traverse (10 ; 10a ; 10b), et **en ce que** la profondeur (t) de l'au moins un évidement (48 ; 48h ; 48i ; 48j) dans l'au moins une paroi transversale (42 ; 42c ; 42d ; 42e ; 42f, 44 ; 44c ; 44d ; 44e ; 44f) n'est pas supérieure à 2/3 de la largeur (b) de l'élément de renfort (20 ; 20a à 20f) lorsqu'on observe dans la direction du flanc arrière (28) de la traverse (10 ; 10a ; 10b).

**7.** Système de gestion des collisions selon l'une quelconque des revendications 1 à 6, **caractérisé en ce que**
entre deux et six évidements (48 ; 48h ; 48j), de préférence quatre évidements (48 ; 48h ; 48j), sont ménagés, et **en ce que** les évidements (48 ; 48h ; 48j) sont en particulier disposés à des distances (C) égales dans une direction s'étendant dans la direction longitudinale (22) de l'élément de renfort (20 ; 20a à 20f).

**8.** Système de gestion des collisions selon l'une quelconque des revendications 1 à 7, **caractérisé en ce que**
l'élément de renfort (20 ; 20a à 20f) possède une longueur (L) minimale de 400 mm et une longueur (L) maximale à laquelle l'élément de renfort (20 ; 20a à 20f) atteint des côtés externes de boîtes-tampons (12, 14) aptes à être reliées à la traverse (10 ; 10a ; 10b) lorsqu'on observe dans la direction longitudinale (22) de la traverse (10 ; 10a ; 10b).

**9.** Système de gestion des collisions selon l'une quelconque des revendications 1 à 8, **caractérisé en ce que**
la traverse (10 ; 10a ; 10b) et/ou l'élément de renfort (20 ; 20a à 20f) sont/est une (des) section(s) extrudée(s) constituée(s) d'aluminium ou d'un alliage d'aluminium.

**10.** Système de gestion des collisions selon l'une quelconque des revendications 1 à 9, **caractérisé en ce que**
l'élément de renfort (20 ; 20a à 20f) est reçu et fixé dans la traverse (10 ; 10a ; 10b) par un emboîtement par complémentarité de forme ou un emboîtement par serrage dans une direction perpendiculaire à la direction longitudinale (22) de la traverse (10 ; 10a ; 10b).

**11.** Système de gestion des collisions selon l'une quelconque des revendications 1 à 10, **caractérisé en ce que**
l'élément de renfort (20 ; 20a à 20e) s'étend sur la totalité de la hauteur interne de la traverse (10) au moins dans l'aire de la paroi avant (38 ; 38h ; 38i).

**12.** Système de gestion des collisions selon l'une quelconque des revendications 1 à 10, **caractérisé en ce que**
l'élément de renfort (20f) s'étend sur moins qu'une partie de la hauteur interne de la traverse (10a ; 10b) au moins dans l'aire de la paroi avant (38f) et est de préférence disposé de manière symétrique par rapport à un plan central (57) de la traverse (10a ; 10b).

**13.** Système de gestion des collisions selon l'une quelconque des revendications 1 à 12, **caractérisé en ce que**
la section transversale de l'élément de renfort (20 ; 20a ; 20c ; 20d ; 20f) comprend au moins une chambre (45).

**14.** Système de gestion des collisions selon l'une quelconque des revendications 1 à 13, **caractérisé en ce que**
la section transversale de l'élément de renfort (20 ; 20a à 20f) comprend une paroi arrière (40, 40f) disposée parallèlement à la paroi avant (38 ; 38f ; 38h ; 38i ; 38j) et reliée à la paroi avant (38 ; 38f ; 38h ; 38i ; 38j) via au moins une paroi transversale (42 ; 42c ; 42d ; 42e ; 42f, 44 ; 44c ; 44d ; 44e ; 44f).

**15.** Système de gestion des collisions selon la revendication 14,
**caractérisé en ce que**
la paroi arrière (40 ; 40f) de l'élément de renfort (20 ; 20a à 20f) possède une plus grande épaisseur de paroi (D) que la paroi avant (38 ; 38f ; 38h ; 38i ; 38j).

Fig. 1

Fig. 2

Fig. 3

Fig. 4

# Fig. 5  Fig. 6  Fig. 7

# Fig. 8  Fig. 9

# Fig. 10  Fig. 11

Fig. 12

Fig. 13

Fig. 14

Fig. 15

Fig. 16

Fig. 17

Fig. 18

**EP 4 532 269 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4919267 B
- JP 2015147437 A
- US 20180105129 A1
- US 2001017473 A
- KR 20140037711 A
- DE 102019101718 A1